# EUROPEAN PATENT APPLICATION

(11) **EP 3 235 469 A1**
(43) Date of publication of application: **25.10.2017**
(21) Application number: 17167743.8
(22) Date of filing: 24.04.2017
(51) Int. Cl.: A61C 13/10, A61C 13/093, A61C 13/103, A61C 13/36

(54) **A DENTURE**

(30) Priority: 24.04.2016 US 201662326772 P
(71) Applicant: Grobbee, Johannes Petrus Michael, 5013 EA Tilburg (NL)
(72) Inventor: Grobbee, Johannes Petrus Michael, 5013 EA Tilburg (NL)
(74) Representative: V.O.

(57) **Abstract**

The present invention relates to Denture Teeth. More particularly, the present invention relates to Denture Teeth to be positioned and mounted to a denture base. The present invention may further relate to a connection from a denture base to denture teeth. The invention even further involves a denture teeth interface for connecting full arch teeth or subsets thereof to a denture base.

## Description

### Field of Invention

The present invention relates to Denture Teeth. More particularly, the present invention relates to Denture Teeth to be positioned and mounted to a denture base.

### Background of the Invention

In the field of Cad/Cam dentures, also known as digital dentures, one difficulty faced by dental technicians is to mount and bond the denture teeth to a denture base. Undercuts in the teeth and the need to maintain sharp transitions around the gingival margins make it difficult for technicians to mount and bond the teeth in the denture base. A denture base has an intaglio surface that is in contact with the mucosal surface when the denture is in position. The other side of the denture base is called the cameo side, which is the side at which the denture teeth are connected to the denture base.

In certain cases denture teeth are too long and protrude though the intaglio surface of the denture. The excess denture teeth then need to be grinded or milled down to fit within the intaglio surface. These inefficiencies cause lost time and the risk of removing too much material, causing the technician to apply weaker "fixes" to the denture or to redo the denture entirely.

### Summary of the Invention

In accordance with various aspects of the present invention, denture teeth may be designed to make mounting and bonding of denture teeth to a Cad/Cam produced denture base less difficult. To this end, the invention provides the denture according to claim 1. The denture teeth may be a digital representation of physical denture teeth sold by suppliers as Ivoclar, Vita and Dentsply. The Denture teeth can also be fully designed by a CAD system. The interface between the denture teeth and the denture base may have a post that fits in mating pockets in the denture base. The interface could be embodied as a male/female connection. This connection could also be reversed in scenarios where the denture base has the posts and the denture teeth the pockets. The interface may further comprise a shoulder that meets exactly with the cameo side of the denture.

In a first embodiment of the invention, a denture teeth interface for mounting denture teeth to a denture base is claimed, said denture teeth interface compromising denture teeth having a post, a denture base having a receiving pocket, a shoulder on the denture teeth that aligns with the cameo side of the denture base, preventing bacteria incursion into a boundary of the denture base and denture teeth. The denture teeth interface may comprise more than one post and more than one receiving pocket, wherein the more than one post mounts the denture teeth to more than one receiving pockets in the denture base. The denture teeth may further comprise a plurality of teeth, each of the plurality of teeth having a post and a shoulder mounted into the receiving pocket in the denture base, wherein a group of two or more denture teeth has one, two or more posts and one, two or more shoulders mounted to the receiving pockets in the denture base, and wherein the post on the denture teeth has a shape that is optionally cylindrical, square, rectangle, curved or a tooth boundary shape, and wherein the shoulder on the denture teeth creates a seal between the denture teeth and the denture base.

In a second embodiment of the invention, a denture teeth interface for mounting denture teeth to a denture base may comprise a post affixed to a denture base, a receiving pocket in a set of denture teeth having individual teeth, a shoulder each of the individual denture teeth meeting exactly with a cameo side of the denture base, wherein two or more pockets mount the set of denture teeth to the respective post on the denture base, and wherein each individual tooth of the set of denture teeth has a pocket and a shoulder mounted on the post in the denture base, and wherein a group of two or more denture teeth has one, two or more pockets and one, two or more shoulders mounted to the receiving posts on the denture base, and wherein the post on the denture base optionally has a cylindrical, square, rectangle, curved or tooth boundary shape, and wherein the shoulder on each individual tooth of the set of denture teeth creates a seal between the denture teeth and the denture base.

### Brief Description of the Drawings

A more complete understanding of the present invention may be derived by referring to the detailed description and claims when considered in connection with the Figures, where like reference numbers refer to similar elements throughout the Figures, and:
FIGS. 1A and 1B show two perspective views of a denture. Denture teeth 301 are installed to the Denture Base 102. The Denture Base 102 has an Intaglio side 103 and a Cameo side 104.
FIG. 2 is a perspective view of a Denture Base 102 with the pockets 105, the intaglio side 103 and the Cameo side 104
FIG. 3 is a perspective view Denture tooth 301 with the post 302 and the shoulder 304.
FIG. 4 is a detailed exploded perspective view of a denture base 102, a denture tooth 301, the pocket 105, the post 302.
FIG. 5A is a perspective view of a denture and FIG. 5B is a cross-section over line A-A from FIG. 5A. The figures show a Denture base 102, a Denture tooth 301, a pocket 105, a post 302 and a shoulder 304 meeting the cameo side 104 of the denture base 102. The connection between the shoulder 304 and the cameo side is the seal 501.
FIGS. 6A-6C shows alternative embodiments of the interface (post and pocket) in cross-section A-A. The cross-section of figure 6A shows a pocket 305 in the tooth 301 and a post 106 on the denture base 102. The cross-sections of figure 6B and 6C show a pocket 105 in the denture base 102 and a post 302 on the tooth 301. All three embodiments of figures 6A-6C show a shoulder 304 on the tooth 301. The shoulder 304 meets the cameo side 104 of the denture base 102.
FIGS. 7A and 7B show an alternative embodiment. Multiple denture teeth 301 can be manufactured as one piece or in multiple groups 308. One or more posts 302 and shoulders 304 can be manufactured to install the denture teeth 301 in the denture base 102.

### Detailed Description of Exemplary Embodiments of the Invention

The present invention may be described herein in terms of various components. It should be appreciated that such components may be realized by any number of structural materials and components configured to perform the specified functions. For example, the present invention may be practiced in any number of dental contexts and the exemplary embodiments relating to Denture teeth interface for dentures are merely a few of the exemplary applications for the invention. For example, the principles, features and methods discussed may be applied to any crown and bridge restorative dentistry or dental treatment application.

In accordance with various aspects of the present invention, a Denture teeth interface is provided to allow an easy and accurate installment of denture teeth in a CAD/CAM manufactured Denture Base.

In accordance with an exemplary embodiment, a Denture base is manufactured using molding, pressing, pouring or CAD/CAM technology like 3D Printing, Layer Manufacturing, Laser engraving, Milling.

In accordance with an exemplary embodiment, the Denture teeth are manufactured using molding, pressing, pouring or CAD/CAM technology like 3D Printing, Layer Manufacturing, Laser engraving, Milling.

In accordance with an exemplary embodiment the interface, pocket, post and shoulder may be manufactured using molding, pressing, pouring or CAD/CAM technology like 3D Printing, Layer Manufacturing, Laser engraving and/or Milling.

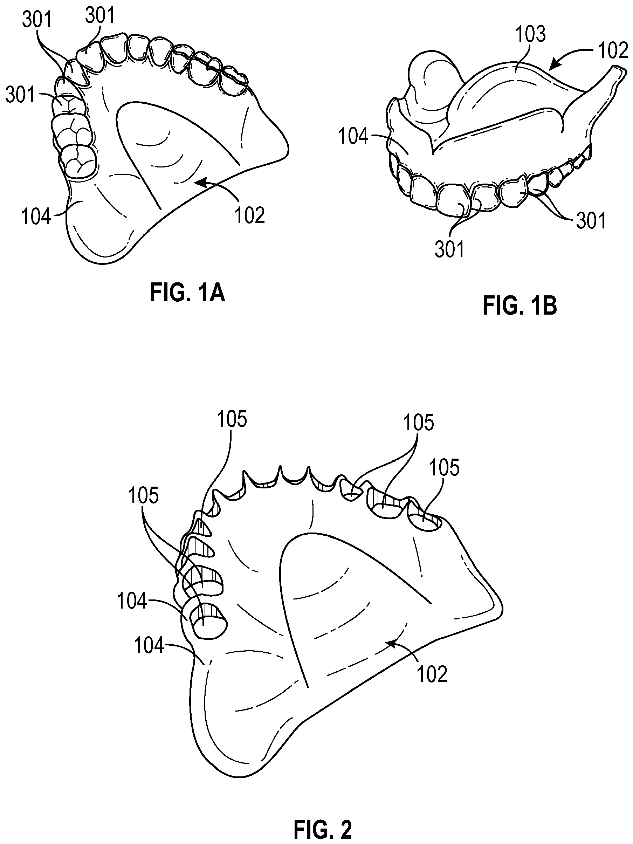

For example, with reference to an exemplary embodiment illustrated in FIG. 1, see two perspective views of a denture. The denture may comprise a denture base 102 that has an intaglio side 103 following a patient's soft tissue and a cameo side 104 simulating the gums of the patient. Denture teeth 301 may be installed in the denture base 102

In an embodiment of the invention depicted in an exemplary embodiment illustrated in FIG. 2, a perspective view shows a denture base 102 with the pockets 105 and the cameo side 104. The depth of the pockets 105 may be maximized to the intaglio surface 103 of the denture base 102. The shape of the pocket may meet the shape of the posts 302 and the posts 302 may be installed into the pocket 105 using a press fit, screw retained or bonding technique. Other shapes of the pocket 105 may be within the scope of the invention to meet other shapes of the posts, as such posts may be known in the arts.

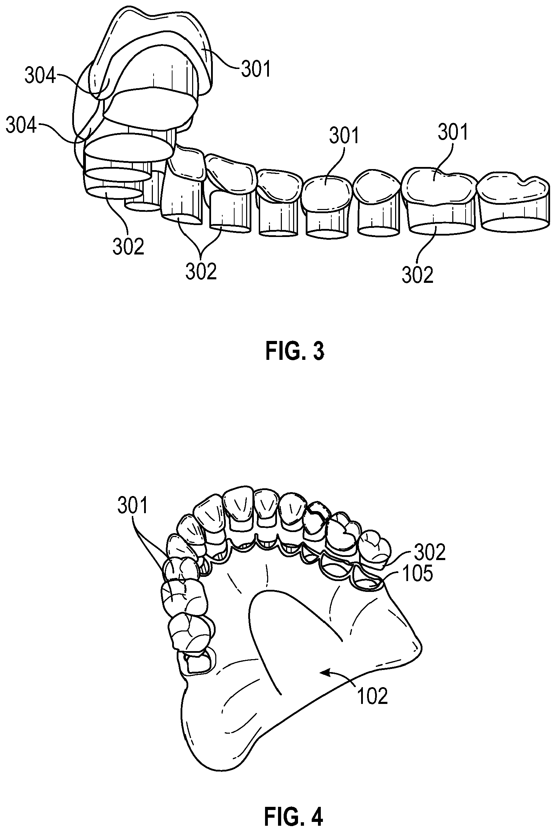

For example, with reference to an exemplary embodiment illustrated in FIG. 3, a perspective view of denture teeth 301 with the posts 302 and the shoulders 304. The denture teeth may be made by known technologies like molding, pressing, pouring or CAD/CAM technology like 3D Printing, layer manufacturing, laser engraving and/or milling. If the denture teeth are pre-manufactured (stock teeth), for example by suppliers as Vita, Dentsply or Ivoclar, the posts 302 and shoulders 304 may added by milling, laser engraving, grinding, erosion or other techniques of removing the material from stock teeth. In the case the denture teeth are custom-made, the posts 302 and shoulders 304 may be integrated in the manufacturing of the complete denture teeth using technologies such as molding, pressing, pouring or CAD/CAM technology like 3D Printing, layer manufacturing, laser engraving and/or milling. The shape of the posts 302 preferably follows the boundary of the denture tooth or can be any shape like cylindrical, square, rectangle, or curved. The shape of the post may further include shapes not illustrated, such as irregular shapes, or those with convex and/or concave surfaces. Posts may be solid or may be afforded with spaces therein.

In this embodiment, the shoulders 304 may engage with the cameo side 104 to achieve a tight, flush connection, reducing the likelihood that bacteria could interfere by migrating into the space between the shoulder 304 and the cameo side 104 of the denture base 102.

In an embodiment of the invention illustrated in FIG 4, an exploded perspective view shows denture base 102, denture teeth 301, the pockets 105, the posts 302. The fit of the posts 302 into the pockets 105 may be based on a press fit, screw retained or connected any other bonding technique known in the arts.

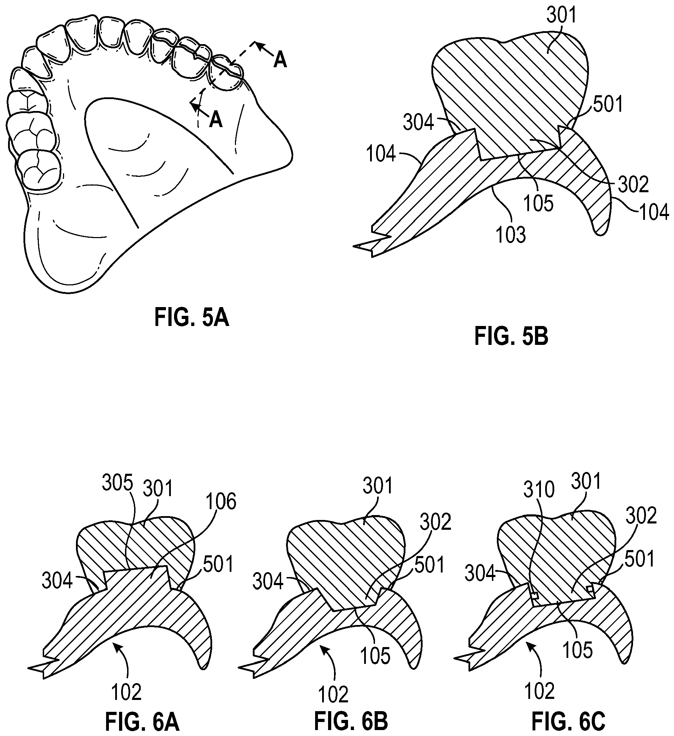

In an embodiment of the invention illustrated in FIGS. 5A and 5B, is a perspective view of a denture and a cross-section A-A of a denture base 102, a denture tooth 301, a post 302, a pocket 105 and a shoulder 304 meeting the cameo side 104 of the denture base 102. In this cross-section the exact match between the shoulder 304 and the cameo side 104 created a seal 501. To avoid bacteria penetrating into the seal area, a sealant or bonding material known in the arts can be used.

With reference to an exemplary embodiment illustrated in FIGS. 6A-6C., alternative embodiments of the interface (post and pocket) in cross-section A-A are shown. In cross-section of FIG. 6A, the post 106 is part of the denture base 102 and the pocket 305 is accommodated in the tooth 301. In FIGS. 6B and 6C, the post 302 is part of the tooth 301 and the pocket 105 is part of the denture base 102. All cross-sections show a shoulder 304 meeting the cameo side 104 of the denture base 102. The denture teeth 301 to denture base 102 connection in FIG 5 may be considered to be a male/female connection. A Female/male connection is also shown in FIGS. 6A, 6B and 6C. Other denture teeth to base connections may be utilized as known in the arts. A tapered post 302 is disclosed in FIG. 6B. A retention groove 310 in the post 302 for increased retention is illustrated in FIG. 6C.

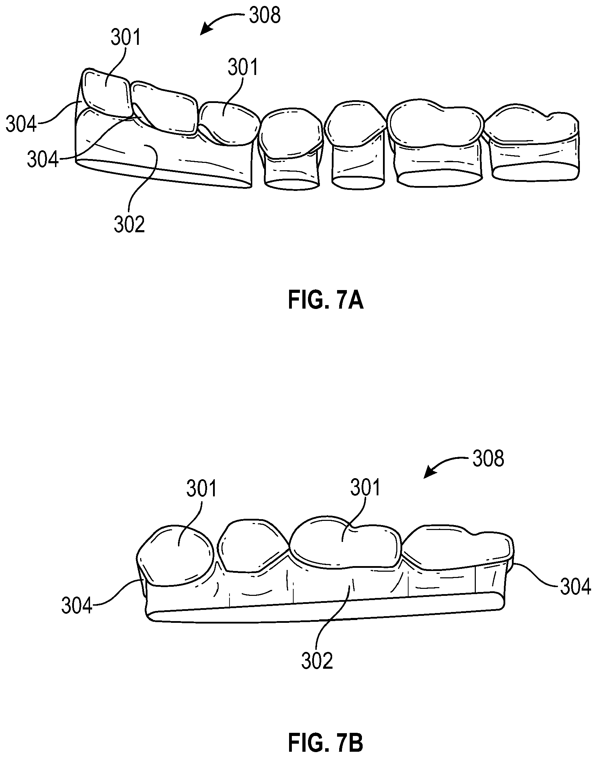

With reference to an exemplary embodiment illustrated in FIG 7, an alternative embodiment is disclosed whereas multiple denture teeth 301 may be manufactured as one piece or in multiple groups 308. One or more posts 302 and shoulders 304 can be manufactured to install the denture teeth 301 in the denture base 102. With CAD/CAM techniques like milling and 3D printing, whole groups of teeth can be fabricated as one piece, as well as on an individual basis or in partial groupings. FIG. 7A. illustrates three front denture teeth 301 as one group 308 with two posts 302 and a shoulder 304. FIG. 7B. illustrates the 4 molar denture teeth 301 as one group 308 with only one post 302 and shoulder 304.

Benefits, other advantages, and solutions to problems have been described herein with regard to specific embodiments. However, the benefits, advantages, solutions to problems, and any element(s) that may cause any benefit, advantage, or solution to occur or become more pronounced are not to be construed as critical, required, or essential features or elements of any or all the claims or the invention. The scope of the present invention is accordingly to be limited by nothing other than the appended claims, in which reference to an element in the singular is not intended to mean "one and only one" unless explicitly so stated, but rather "one or more." All structural, chemical, and functional equivalents to the elements of the above-described exemplary embodiments that are known to those of ordinary skill in the art are expressly incorporated herein by reference and are intended to be encompassed by the present claims.

## Claims

1. A denture compromising a denture base (102) and denture teeth (301), the denture base (102) having a cameo side (104) at which the teeth (301) are connected to the denture base via an denture teeth interface, the denture teeth interface including:
at least one post (302; 106) affixed to one of the denture base (102) and the denture teeth (301),
at least one receiving pocket (105; 305) in another one of the denture base (102) and the denture teeth (301),
a shoulder (304) on the denture teeth (301) that aligns with the cameo side (104) of the denture base (102).

2. The denture according to claim 1, wherein the at least one post (302) is affixed to the denture teeth (301) and wherein the at least one receiving pocket (105) is accommodated in the denture base (102), wherein the shoulder (304) on the denture teeth (301) that aligns with the cameo side (104) of the denture base (104) is configured to prevent bacteria incursion into a boundary area of the denture base (102) and denture teeth (301).

3. The denture according to claim 2 having more than one post (302) and more than one receiving pocket (105), wherein the more than one post (302) mounts the denture teeth (301) to the more than one receiving pockets (105) in the denture base.

4. The denture according to claim 2 or 3, comprising a plurality of teeth (301), each of the plurality of teeth (301) having a post (302) and a shoulder (304), wherein the plurality of teeth is mounted into the at least one receiving pocket (105) in the denture base (102).

5. The denture according to claim 2, including a group (308) of two or more denture teeth (301), wherein the group (308) has one, two or more posts (302) and one, two or more shoulders (304), wherein the group (308) is mounted to the at least one receiving pocket (105) in the denture base (102).

6. The denture according to any one of claims 2-5, wherein the post (302) on the denture teeth (301) has a shape chosen from the group consisting of a cylindrical, a square, a rectangular, a curved or a tooth boundary shape.

7. The denture according to claim 1 or 2, wherein the shoulder (304) on the denture teeth (301) creates a seal (501) between the denture teeth (301) and the denture base (102).

8. The denture according to claim 1, wherein the at least one post (106) is affixed to the denture base (102) and wherein the at least one receiving pocket (305) is accommodated in a set of denture teeth having individual teeth (301), the shoulder (304) of each of the individual denture teeth (301) meeting exactly with the cameo side (104) of the denture base (102).

9. The denture according to claim 8, wherein the set of denture teeth (301) includes two or more pockets (305) for mounting the set of denture teeth to the respective posts (106) on the denture base (102).

10. The denture according to claim 8, wherein each individual tooth (301) of the set of denture teeth has a pocket (305) and a shoulder (304), wherein each individual tooth (301) is mounted on an associate one of the at least one post (106) affixed to the denture base (102).

11. The denture according to claim 8, wherein a group of two or more denture teeth (301) has one, two or more pockets (305) and one, two or more shoulders (304), wherein the group is mounted to the receiving posts (106) on the denture base (102).

12. The denture according to claim 8, wherein the post (106) on the denture base (102) has a shape chosen from the group consisting of a cylindrical, a square, a rectangular, a curved or a tooth boundary shape.

13. The denture according to claim 8, wherein the shoulder (304) on each individual tooth (301) of the set of denture teeth creates a seal (501) between the denture teeth (301) and the denture base (102).
